# EUROPÄISCHE PATENTANMELDUNG

(11) **EP 1 431 603 A1**
(43) Veröffentlichungstag der Anmeldung: **23.06.2004**
(21) Anmeldenummer: 03028336.0
(22) Anmeldetag: 10.12.2003
(51) Int. Cl.: F16D 3/20, F16D 3/50

(54) **Ausgleichskupplung**

(30) Priorität: 18.12.2002 DE 10259125
(71) Anmelder: Wissing, Heinrich, 48691 Vreden (DE); Wissing, Johannes, 48703 Stadtlohn (DE)
(72) Erfinder: Wissing, Heinrich, 48691 Vreden (DE); Wissing, Johannes, 48703 Stadtlohn (DE)
(74) Vertreter: Habbel, Ludwig (Lutz), Dipl.-Ing.

(57) **Zusammenfassung**

Bei einer Ausgleichskupplung für eine drehbare, zweigeteilte Welle, mit zwei Kupplungsteilen, von denen jeder mit jeweils einem der beiden Wellenabschnitte verbunden ist, und welche zueinander abwinkelbar sind, und welche Drehkräfte übertragend miteinander verbunden sind, schlägt die Erfindung vor, dass ein Kupplungsteil (7) eine kugelsegmentartig konvexe oder hohikugelartig konkave Oberfläche aufweist, und das andere Kupplungsteil (6) eine korrespondierend geformte Oberfläche aufweist, welche dem ersten Kupplungsteil zumindest auf einer Ringlinie anliegt.

## Beschreibung

Die Erfindung betrifft eine Ausgleichskupplung nach dem Oberbegriff des Anspruchs 1.

Derartige Ausgleichskupplungen sind aus der Praxis in vielfältigen Ausgestaltungen bekannt. Aus der DE-U-66 02 935 ist beispielsweise eine Ausgleichskupplung bekannt, welche über eine Bogenverzahnung einen Winkelfehler der beiden Wellenabschnitte auszugleichen vermag, wobei die Verzahnung die Übertragung von Drehkräften ermöglicht.

Aus der DE 33 12 825 ist eine Bolzenkupplung als Ausgleichskupplung bekannt, wobei zwei plane Scheiben abwechselnd jeweils Aufnahmebohrungen für an jeweils der anderen Scheibe befestigte Bolzen aufweisen, um auf diese Weise Drehkräfte übertragen zu können. Da die Bolzen in den zugeordneten Aufnahmebohrungen kippbeweglich sind, können auch bei dieser Konstruktion Winkelfehler der beiden Wellenabschnitte ausgeglichen werden.

Bei den bekannten Ausgleichskupplungen ist nachteilig, dass bei auftretenden Schubkräften die beiden beweglich gegeneinander vorgesehenen Teile der Kupplung zusammengepresst werden und dabei entgegen dem möglicherweise bestehenden Winkelfehler so stark aneinander gedrückt werden können, dass sie sich geradlinig aneinander anlegen. Auf diese Weise wird der Winkelfehler nicht mehr ausgeglichen, sondern vielmehr kommt es entweder in den Kupplungsteilen oder in unmittelbar der Kupplung benachbarten Bereichen der beiden Wellenabschnitte zu Überlastungen und damit zu einem vorschnellen Verschleiß.

Insbesondere ist dies aus der Praxis beispielsweise im Bereich der Abfallwirtschaft bekannt, wo Schneckenverdichter bzw. Schneckenförderer eingesetzt werden.

Der Erfindung liegt die Aufgabe zugrunde, eine gattungsgemäße Ausgleichskupplung dahingehend zu verbessern, dass diese Torsionskräfte übertragen, Winkelfehler ausgleichen und Druckkräfte aufnehmen kann, wobei eine gute Betriebssicherheit und geringe Störungsanfälligkeit gesichert ist. Weiterhin liegt der Erfindung die Aufgabe zugrunde, einen Schneckenförderer bzw. Schneckenverdichter zum Aufbereiten von Wertstoffen zu schaffen, der möglichst betriebssicher und störungsunanfällig ist.

Diese Aufgabe wird durch eine Ausgleichskupplung mit den Merkmalen des Anspruchs 1 und durch einen Verdichter bzw. Förderer mit den Merkmalen des Anspruchs 5 gelöst.

Die Erfindung schlägt mit anderen Worten vor, die beiden aneinander zur Anlage kommenden Flächen der Kupplung in ihrem Kontaktbereich nicht plan auszugestalten, sondern vielmehr zumindest eine der beiden Flächen kurvig auszugestalten, also entweder bauchig konvex oder eingewölbt konkav. Das korrespondierende Bauteil der Kupplung liegt diesem ersten, kurvigen Bauteil zumindest entlang einer Ringfläche an, kann also z. B. eine ring- oder rohrartige Kontaktfläche aufweisen. Bei auftretenden Druckkräften kommt es daher nicht dazu, dass sich diese beiden Kupplungsbauteile in einer anderen als der momentanen Winkelstellung zueinander auszurichten bestrebt sind, sodass auch bei auftretenden Druckkräften ein zuverlässiger Ausgleich des Winkelfehlers möglich ist, und sodass es nicht durch eine Verringerung der Ausgleichsmöglichkeit dieses Winkelfehlers zu einer Überlastung entweder der Kupplung oder der beiden Wellenabschnitte kommt.

Die beiden korrespondierenden Oberflächen können ringartig ausgestaltet sein. Je breiter dieser Ringe sind, desto größer kann ein Winkelfehler zwischen den beiden Wellenabschnitten sein, der noch ausgeglichen werden kann, und desto geringer und dementsprechend materialschonender sind die auftretenden Flächenpressungen, welche bei einer Druckbelastung der Ausgleichskupplung auf die beiden korrespondierenden Oberflächen einwirken.

Die beiden entsprechenden Kupplungsbauteile können vorteilhaft kugelkopfartig mit konvexem Kopf und konkaver Pfanne und jeweils nicht ringartigen, sondern im wesentlichen geschlossenen Oberflächen ausgestaltet werden. Auf diese Weise sind auch größere Druckkräfte aufgrund der vergleichsweise kleineren Flächenpressung beschädigungsarm übertragbar.

Bei Ausgestaltung als regelrechter Kugelkopf - also mit einem Kugelsegmentverlauf von mehr als 180° und einem sich an die Kugel anschließenden engeren Kupplungshals - besteht die Möglichkeit, den Kopf von der Pfanne hintergreifen zu lassen, sodass die Kupplung nicht nur Druckkräfte, sondern auch Zugkräfte aufnehmen kann und gleichzeitig den Ausgleich eines Winkelfehlers ermöglicht. Insbesondere bei den angesprochenen Schneckenförderern bzw. Schneckenverdichtern kann so die Schnecke im Reversierbetrieb laufen, wobei Zugkräfte auf die Kupplung einwirken und wobei die Kupplung eine sichere Übertragung der Kräfte ermöglicht.

Die Übertragung der Drehkräfte kann in an sich bekannter Weise erfolgen, beispielsweise wie bei sogenannten "Reifenkupplungen" durch eine Gummi- / Gewebe-Karkasse, die zwei gehäuseartige, um die vorbeschriebenen Kupplungselemente herum verlaufenden Gehäusebauteile der Kupplung torsionsfest miteinander verbindet. Aber auch die vorbeschriebenen Bogenzahn- oder Bolzenelemente können zur Übertragung von Drehkräften an der vorschlagsgemäßen Kupplung vorgesehen sein, wobei diese Elemente dann jedoch an der Übertragung von Druckkräften nicht wesentlich beteiligt sind. Andere beliebige Elemente zur Drehkraftübertragung, wie beispielsweise eine kardanische Verbindung der beiden Kupplungsbauteile miteinander, können ebenfalls vorgesehen sein.

Um einen Ausgleich eines radialen und / oder axialen Versatzes der beiden Wellenabschnitte zu ermöglichen, können innerhalb der Kupplung einzelne Elemente ein bewusst vorgesehenes Spiel aufweisen, oder es können elastisch verformbare Elemente vorgesehen sein.

Ausführungsbeispiele der Erfindung werden anhand der rein schematischen Zeichnungen nachfolgend näher erläutert. Dabei zeigt
- Fig. 1: eine Ausgleichskupplung,
- Fig. 2: einen Schneckenförderer bzw. Schneckenverdichter, der mit einer Ausgleichskupplung ausgestattet ist, und
- Fig. 3: eine Ausgleichskupplung mit der Möglichkeit, auch einen axialen und radialen Versatz auszugleichen.

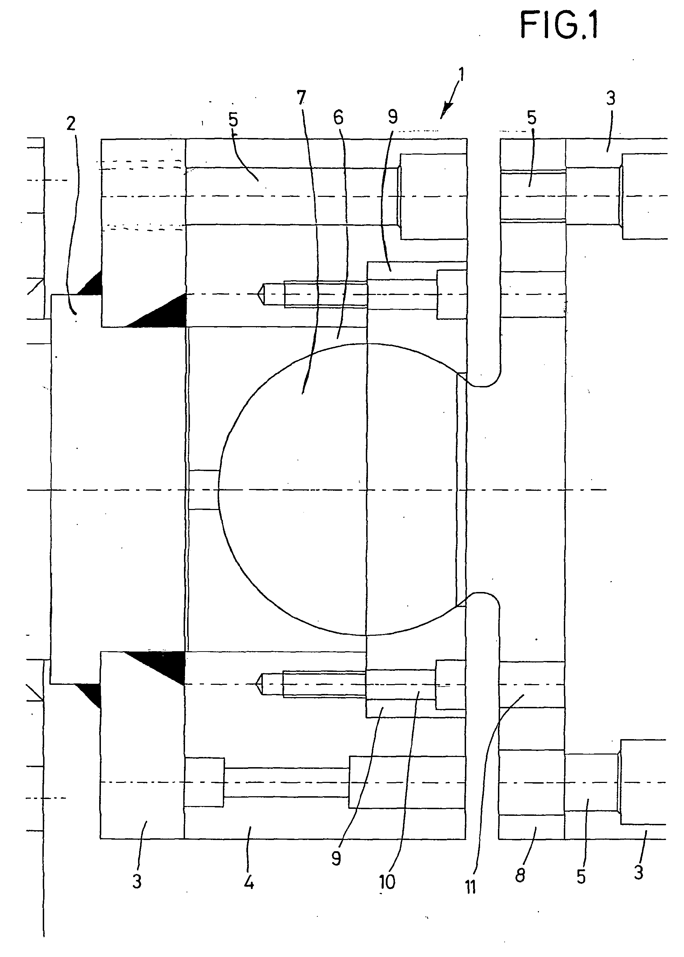

In Fig. 1 ist mit 1 allgemein eine Ausgleichskupplung bezeichnet, die auf einer Welle 2 montiert ist. Die Welle 2 weist einen Wellenflansch 3 zur Montage der Kupplung 1 auf, wobei mit dem Wellenflansch 3 ein als Pfannengehäuse 4 bezeichnetes Kupplungsteil verschraubt ist. Eine entsprechende Befestigungsschraube ist bei 5 angedeutet.

Das Pfannengehäuse 4 nimmt eine Pfanne 6 auf, welche beispielsweise aus Kunststoff, Bronze oder einem ähnlichen Werkstoff mit selbstschmierenden Eigenschaften bestehen kann. Verformungen dieser Pfanne 6 sind aufgrund der Abstützung an der Welle 2 und dem umliegenden Pfannengehäuse 4 nicht zu befürchten, auch wenn erhebliche Druckkräfte in die Pfanne 6 eingeleitet werden.

Das mit der Pfanne 6 korrespondierende Kupplungsbauteil ist als Kugelkopf 7 ausgestaltet, der mittels eines Kugelflansches 8 mit dem anderen Wellenabschnitt verbunden ist.

Um auch Zugkräfte mittels der Ausgleichskupplung 1 übertragen zu können und da die Pfanne 6 den Kugelkopf 7 um lediglich 180° umgreift, ist ein Haltering 9 vorgesehen, welcher den Kugelkopf, an die Pfanne 6 anschließend, hintergreift, wobei dieser Haltering 9 mit der Pfanne 6 bzw. dem Pfannengehäuse 4 durch Halteschrauben 10 verbunden ist. Die Halteschrauben 10 sind durch Bohrungen 11 im Kugelflansch 8 erreichbar, um die Montage des Halterings 9 problemlos zu ermöglichen. Dabei kann der Haltering 9 zwei oder mehrteilig ausgestaltet sein, oder es kann vorgesehen sein, dass abweichend vom dargestellten Ausführungsbeispiel der Kugelkopf 7 im Bereich seines geringsten Umfangs, am sogenannten Kugelhals, mit dem Kugelflansch 8 verschraubt ist, sodass bei vom Kugelflansch 8 getrennten Kugelkopf 7 die Halteschrauben 10 zugänglich sind, auch wenn der Kugelflansch 8 ohne die in Fig. 1 dargestellten Bohrungen 11 ausgestaltet ist.

Der Kugelflansch 8 seinerseits ist mittels Befestigungsschrauben 5 mit einem Wellenflansch 3 des zweiten Wellenabschnitts verbunden.

Die Ausgestaltung der Ausgleichskupplung 1 gemäß Fig. 1 ermöglicht das Übertragen von Druck- und Zugkräften auch bei Winkelfehlern zwischen den beiden Wellenabschnitten der Welle 2.

Zusätzlich zu den beiden dargestellten Kupplungsteilen Pfanne 6 und Kugelkopf 7 sind zusätzliche Kupplungsteile vorgesehen, welche die Übertragung von Drehkräften ermöglichen. So können beispielsweise versetzt zu den jeweiligen Befestigungsschrauben 5 Bohrungen im Kugelflansch 8 und / oder im Pfannengehäuse 4 vorgesehen sein, sodass von dem jeweils anderen Bauteil sich Bolzen in diese Bohrungen erstrecken können, um eine Drehkraftübertragung mit einer derartigen Bolzenkupplung zu ermöglichen. Aber auch die vorerwähnten Ausgestaltungen als Reifenkupplung oder mittels einer Bogenverzahnung oder in Form eines an sich bekannten Kardangelenkes können zu einer derartigen Drehkraftübertragung vorgesehen sein.

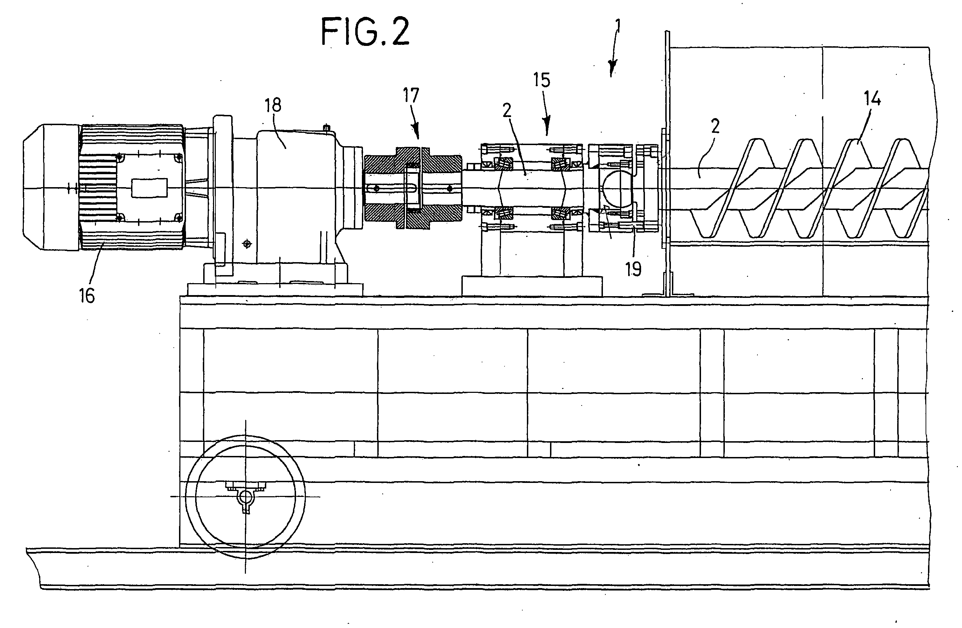

In Fig. 2 ist ein Schneckenverdichter bzw. ein Schneckenförderer ausschnittsweise dargestellt und insgesamt mit 12 bezeichnet. Dieser weist eine Schnecke 14 auf, deren Welle 2 einen der beiden Wellenabschnitte bildet, die mittels der Ausgleichskupplung 1 miteinander verbunden sind. Der zweite Abschnitt der Welle 2 stellt die Antriebswelle dar, die in einem Lager 15 gelagert ist und von einem Elektromotor 16 in Drehung versetzt wird. Um eine leichte Auswechselbarkeit sämtlicher Komponenten zu ermöglichen, ist diese im Lager 15 gelagerte Welle 2 über eine handelsübliche Klauenkupplung 17 mit dem Elektromotor 16 bzw. einem Reduziergetriebe 18 verbunden.

Die Ausgleichskupplung 1 ist gemäß Fig. 1 ausgestaltet, allerdings ist in Fig. 2 auch ein Bolzen 19 erkennbar, der - zusammen mit weiteren, umfangsmäßig verteilt angeordneten gleichartigen Bolzen - die Übertragung von Drehkräften in Art einer Bolzenkupplung bei der Ausgleichskupplung 1 ermöglicht.

Abweichend von dem dargestellten Ausführungsbeispiel kann auch vorgesehen sein, dass die beiden Kupplungsteile einen axialen Wellenversatz ausgleichen können. Zu diesem Zweck kann zwischen dem Kugelflansch 8 und dem zugehörigen Wellenflansch 3 ein Gehäuse zwischengeschaltet sein, welches fest mit dem Wellenflansch 3 verbunden ist und welches den Kugelflansch umgreift, wobei der lichte Durchmesser innerhalb dieses Gehäuses größer ist als der Außendurchmesser des Kugelflansches, sodass der Kugelflansch radial beweglich ist.

Auch das Pfannengehäuse 4 kann einen nach außen weisenden Flansch aufweisen, sodass zwischen diesem Pfannengehäuse 4 und dem dort angrenzenden Wellenflansch 3 ein Gehäuse zwischengeschaltet sein kann, ähnlich dem vorbeschriebenen Gehäuse, welches den Kugelflansch 3 umgreift, wobei dieses pfannenseitige Gehäuse den am Pfannengehäuse 4 vorgesehenen Flansch umgreift.

Aufgrund der radialen Beweglichkeit des Kugelkopfes und / oder der Pfanne ist bei einer derartigen Konstruktion der Ausgleich nicht nur von Winkelfehlern, sondern auch eines axialen Versatzes der beiden Wellenabschnitte möglich.

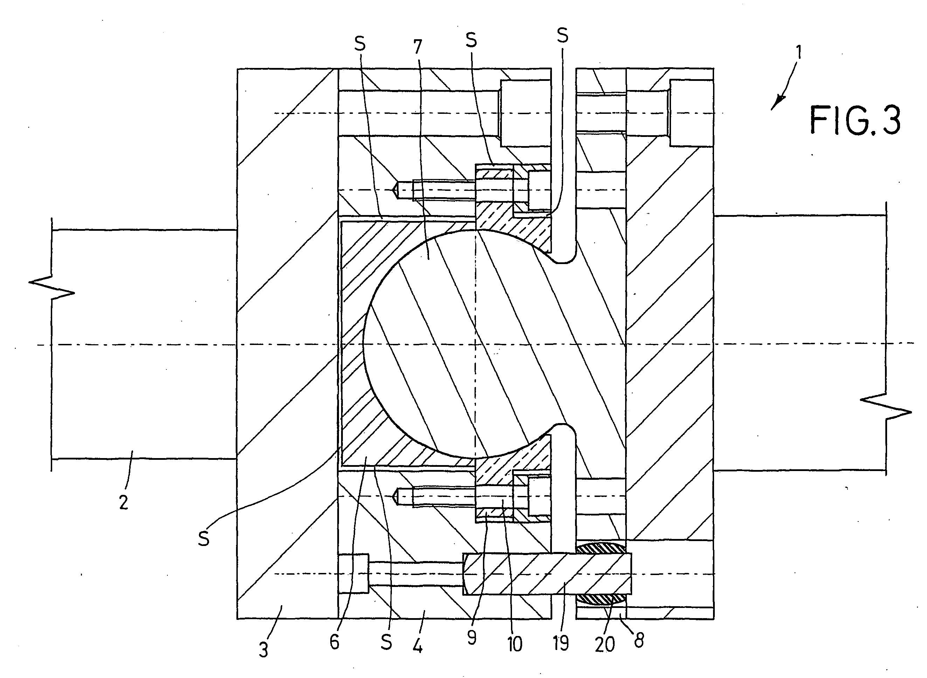

Ein Ausführungsbeispiel, welches einen axialen und radialen Versatz der beiden Wellenabschnitte auszugleichen vermag, ist in Fig. 3 dargestellt, wobei für grundsätzlich gleiche Bauteile dieselben Bezugszeichen verwendet werden wie in Fig. 1. Die den Kugelkopf 7 umgebenden Bauteile wie die Pfanne 6 und der Haltering 9 sind jeweils zugunsten eines sich ergebenden radialen Spiels S bemaßt. Die Bolzen 19 sind innerhalb des Kugelflansches 8 mittels eines elastischen Kugelkissens 20 elastisch gelagert und können somit Torsionskräfte zwischen den Wellenabschnitten übertragen und Winkelfehler zwischen ihnen ausgleichen.

## Patentansprüche

1. Ausgleichskupplung für eine drehbare, zweigeteilte Welle, mit zwei Kupplungsteilen, von denen jeder mit jeweils einem der beiden Wellenabschnitte verbunden ist,
und welche zueinander abwinkelbar sind,
und welche Drehkräfte übertragend miteinander verbunden sind,
**dadurch gekennzeichnet,**
**dass** ein Kupplungsteil eine kugelsegmentartig konvexe oder hohlkugelartig konkave Oberfläche aufweist,
und das andere Kupplungsteil eine korrespondierend geformte Oberfläche aufweist,
welche dem ersten Kupplungsteil zumindest auf einer Ringlinie anliegt.

2. Ausgleichskupplung nach Anspruch 1,
**dadurch gekennzeichnet,**
**dass** das konvexe Kupplungsteil einen Kugelkopf (7) aufweist, der vom konkaven Kupplungsteil hintergriffen ist, derart, dass die Kupplung (1) die Übertragung von Zugkräften ermöglicht.

3. Ausgleichskupplung nach Anspruch 1 oder 2,
**dadurch gekennzeichnet,**
**dass** die beiden Kupplungsteile aus Werkstoffen bestehen, die eine selbstschmierende Reibpaarung bilden, wie Stahl und Bronze, oder Metall und Kunststoff.

4. Ausgleichskupplung nach einem der vorhergehenden Ansprüche,
**dadurch gekennzeichnet,**
**dass** die Elemente der Ausgleichskupplung (1) ein Spiel S zwischen sich aufweisen, derart, dass die beiden Wellenabschnitte mit einem axialen und / oder radialen Versatz spannungsfrei montierbar sind.

5. Ausgleichskupplung nach einem der vorhergehenden Ansprüche,
**dadurch gekennzeichnet,**
**dass** die Ausgleichskupplung (1) elastische Elemente aufweist, derart, dass die beiden Wellenabschnitte mit einem axialen und / oder radialen Versatz spannungsfrei montierbar sind.

6. Verdichter zum Aufbereiten von Werkstoffen, mit einer Schnecke und einem die Schnecke drehantreibenden Motor,
**gekennzeichnet durch**
eine zwischen Motor (16) und Schnecke (14) angeordnete Ausgleichskupplung (1) nach einem der vorhergehenden Ansprüche.

7. Verdichter nach Anspruch 6,
**dadurch gekennzeichnet,**
**dass** die Ausgleichskupplung (1) zwischen der Schnecke (14) und dem motornahen Lager der Schnecke (14) angeordnet ist.
